# EUROPÄISCHE PATENTSCHRIFT

(11) **EP 4 119 288 B1**
(45) Veröffentlichungstag und Bekanntmachung des Hinweises auf die Patenterteilung: **04.10.2023**
(21) Anmeldenummer: 22168306.3
(22) Anmeldetag: 14.04.2022
(51) Int. Cl.: B23Q 1/25, G01D 5/00, G05B 19/19, B23Q 1/52, B23Q 17/22, B23Q 17/00

(54) **VORRICHTUNG ZUR KORREKTUR VON POSITIONSABWEICHUNGEN EINER BEARBEITUNGSMASCHINE**
DEVICE FOR CORRECTING POSITIONAL DEVIATIONS OF A PROCESSING MACHINE
DISPOSITIF DE CORRECTION DES ÉCARTS DE POSITION D'UNE MACHINE D'USINAGE

(30) Priorität: 14.07.2021 DE 102021207479
(43) Veröffentlichungstag der Anmeldung: 18.01.2023
(73) Patentinhaber: Dr. Johannes Heidenhain GmbH, 83301 Traunreut (DE)
(72) Erfinder: MITTERREITER, Johann, 83339 Chieming (DE); MIESS, Peter, 83334 Inzell (DE)

(56) Entgegenhaltungen:
- EP-A1- 3 591 344
- EP-A2- 1 175 960
- WO-A1-2015/022398
- JP-A- 2008 073 791

## Beschreibung

### GEBIET DER TECHNIK

Die Erfindung betrifft eine Vorrichtung umfassend eine Messeinrichtung, eine Regeleinrichtung, ein Stellglied sowie eine Steuerung gemäß dem Anspruch 1.

In Bearbeitungsmaschinen beziehungsweise Bearbeitungszentren, insbesondere bei Werkzeugmaschinen, wird durch eine Steuerung mit Hilfe von Antrieben eine relative Bewegung eines Werkzeugs zum Werkstück gesteuert. Häufig ist das Werkzeug in einer Spindel fixiert und das Werkstück auf einem schwenkbaren Rundtisch befestigt. Spindeln oder Motorspindeln halten insbesondere in Werkzeugmaschinen häufig ein rotierendes Werkzeug, beispielsweise einen Fräser. An den schwenkbaren Rundtischen werden Werkstücke befestigt, die dann zum Beispiel spanabhebend bearbeitet werden. Solche Spindeln oder Rundtische sind häufig mit Winkelmesseinrichtungen ausgestattet, die zur Messung von Drehbewegungen einer Welle dienen. Winkelmesseinrichtungen werden insbesondere bei Bearbeitungsmaschinen für die Messung von rotatorischen Bewegungen eingesetzt. Es besteht der zunehmende Wunsch die Leistungsfähigkeit derartiger Bearbeitungsmaschinen, insbesondere die Präzision während des Betriebs, zu erhöhen.

### STAND DER TECHNIK

In den Anmeldungen EP 3 591 344 A1 und EP 3 760 980 A1 der Anmelderin sind Messeinrichtungen offenbart, die geeignet sind Positionsmessungen in mehreren Raumrichtungen durchzuführen, insbesondere auch eine Messung einer Verkippung einer Drehachse, die Rückschlüsse auf eine Belastung eines drehbaren Maschinenteils erlauben.

Aus der WO 2015/022398 A1 ist eine Messeinrichtung zur rechnerischen Kompensierung bzw. Kalibrierung der von der Soll-Orientierung (parallel zur x-Achse) abweichenden Orientierung der Drehachse (Verkippung) einer Werkzeugmaschine bekannt.

Aus der EP 1 175 960 A2 ist eine automatische Korrektur der Orientierung der Drehachse (Verkippung) einer Werkzeugmaschine bekannt.

Aus der JP 2008 073 791 A ist eine Korrektur der relativen Position zwischen einem Werkzeughalter und einem Werkstückhalter in zwei Dimensionen bekannt.

### ZUSAMMENFASSUNG DER ERFINDUNG

Der Erfindung liegt die Aufgabe zugrunde eine Vorrichtung zu schaffen, die es ermöglicht im laufenden Betrieb einer Werkzeugmaschine deren Positionierungsgenauigkeit zu erhöhen.

Diese Aufgabe wird erfindungsgemäß durch die Merkmale des Anspruches 1 gelöst.

Demnach umfasst die Vorrichtung, die dazu geeignet ist Positionsabweichungen zwischen einem Werkzeughalter und einem Werkstückhalter einer Bearbeitungsmaschine zu korrigieren, eine Messeinrichtung, eine Regeleinrichtung, ein Stellglied sowie eine Steuerung. Die Messeinrichtung umfasst eine erste Bauteilgruppe und eine zweite Bauteilgruppe, wobei die erste Bauteilgruppe und die zweite Bauteilgruppe relativ zueinander um eine Drehachse drehbar sind. Die erste Bauteilgruppe ist an einer ortsfesten Struktur der Bearbeitungsmaschine befestigbar und somit ortsfest angeordnet bezüglich eines kartesischen Koordinatensystems mit einer ersten Richtungsachse, einer zweiten Richtungsachse und einer dritten Richtungsachse. Die zweite Bauteilgruppe ist an einem um die Drehachse drehbaren beziehungsweise schwenkbaren Bauelement befestigbar, so dass im Ruhezustand der Bearbeitungsmaschine die Drehachse im kartesischen Koordinatensystem bei perfekter Einrichtung parallel zur ersten Richtungsachse verläuft. Durch die Messeinrichtung ist eine Messung der relativen Position zwischen der ersten Bauteilgruppe und der zweiten Bauteilgruppe in mehreren Dimensionen, also in mehreren Freiheitsgraden (z. B. sechs) der Bewegungen im Raum, durchführbar. Weiterhin sind durch die Messeinrichtung unter Betriebslast der Bearbeitungsmaschine erste Signale erzeugbar, welche eine Information der tatsächlichen Orientierung der Drehachse relativ zur ersten Richtungsachse beinhalten. Zudem sind durch die Messeinrichtung unter Betriebslast der Bearbeitungsmaschine zweite Signale erzeugbar, die eine Information der tatsächlichen translatorischen Position der ersten Bauteilgruppe relativ zur zweiten Bauteilgruppe in der ersten Richtungsachse und / oder in der zweiten Richtungsachse und / oder in der dritten Richtungsachse beinhalten. Die Messeinrichtung ist mit der Regeleinrichtung zur Übertragung der ersten Signale verbunden. Das Stellglied ist am Bauelement so montierbar, dass durch Betätigen des Stellglieds die Orientierung der Drehachse relativ zur ersten Bauteilgruppe veränderbar ist. Die Regeleinrichtung ist so konfiguriert, dass in Abhängigkeit von der Information der tatsächlichen Orientierung der Drehachse relativ zur ersten Richtungsachse die Drehachse mit Hilfe des Stellglieds in eine Sollorientierung bringbar ist. Weiterhin ist die Messeinrichtung mit der Steuerung zur Übertragung der zweiten Signale verbunden, so dass eine Korrektur der relativen Position zwischen dem Werkzeughalter und dem Werkstückhalter mit Hilfe von Antrieben ermöglicht wird.

Das Stellglied kann beispielsweise genau einen Aktuator aufweisen. Eine derartige Anordnung ist im Hinblick auf die Minimierung des baulichen Aufwandes insbesondere dann vorteilhaft, wenn die Orientierung der Drehachse durch eine Gewichtskraft (z. B. des Werkstückes) maßgeblich beziehungsweise dominant beeinflusst wird. In diesem Fall würde der eine Aktuator in vertikaler Richtung längenveränderlich sein.

Mit Vorteil umfasst das Stellglied zumindest zwei Aktuatoren oder drei Aktuatoren, welche dann sternförmig angeordnet sind.

Vorteilhafterweise umfasst das Stellglied zumindest einen Aktuator und ein Lager, insbesondere ein Wälzlager, wobei der zumindest eine Aktuator an dem Lager, insbesondere an dessen Außenring, angreift, so dass also die Stellkräfte auf das Lager wirken. Das Lager, insbesondere dessen Innenring, ist vorzugsweise an dem drehbaren Bauelement montierbar.

In weiterer Ausgestaltung der Erfindung umfasst das Stellglied zumindest einen Aktuator dessen Funktion auf dem Piezo-Effekt beruht. Alternativ kann das Stellglied auch einen Aktuator aufweisen, der nach einem hydraulischen Prinzip arbeitet oder der als ein Keilgetriebe ausgestaltet ist. Ebenso kann gegebenenfalls ein elektrisch angetriebener Aktuator verwendet werden. Generell ist es vorteilhaft, wenn das Stellglied zumindest einen Aktuator aufweist, dessen Funktion auf einem elektro-mechanischen Prinzip beruht.

Die Regeleinrichtung und das Stellglied können so konfiguriert sein, dass durch diese auch Schwingungen oder Vibrationen, wie sie bei der Bearbeitung von Werkstücken auftreten können, etwa Ratter-Schwingungen, gedämpft beziehungsweise unterdrückt werden. Dadurch kann insbesondere die Qualität der bearbeiteten Oberflächen des Werkstückes verbessert werden.

Mit Vorteil ist durch die Messeinrichtung eine Messung der Winkelstellung zwischen der ersten Bauteilgruppe und der zweiten Bauteilgruppe durchführbar und es sind Winkelstellungssignale erzeugbar, welche eine Information der Winkelstellung beinhalten, wobei die Messeinrichtung mit der Steuerung zur Übertragung der Winkelstellungssignale verbunden ist.

Die Messeinrichtung umfasst vorteilhafterweise zumindest zwei erste Positionsaufnehmer, zumindest zwei zweite Positionsaufnehmer und ein Skalenelement, das eine erste Teilung beziehungsweise eine erste Skala und eine zweite Teilung beziehungsweise eine zweite Skala aufweist. Das Skalenelement ist relativ zu den ersten und zweiten Positionsaufnehmern um die Drehachse drehbar angeordnet. Die erste Teilung umfasst regelmäßige Strukturen, die entlang einer ersten Richtung parallel zueinander aneinandergereiht angeordnet sind, wobei die erste Richtung eine Richtungskomponente in Umfangsrichtung aufweist. Die zweite Teilung umfasst regelmäßige Strukturen, die entlang der ersten Richtungsachse x parallel zueinander aneinandergereiht angeordnet sind, wobei die erste Richtungsachse x eine Richtungskomponente in axialer Richtung aufweist. Die zumindest zwei ersten Positionsaufnehmer sind zueinander in Umfangsrichtung versetzt angeordnet, wobei durch die zumindest zwei ersten Positionsaufnehmer die erste Teilung abtastbar ist, so dass die Position des Skalenelements in einer Ebene, die senkrecht zur Drehachse orientiert ist, bestimmbar ist (und damit die Position der Drehachse beziehungsweise eine Achsverlagerung unter Betriebslast). Zudem ist durch Abtastung der ersten Teilung durch zumindest einen der ersten Positionsaufnehmer eine Winkelstellung des Skalenelements in Bezug auf die ersten Positionsaufnehmer (also relativ zu den Positionsaufnehmern) innerhalb einer Umdrehung hinweg absolut bestimmbar. Die zumindest zwei zweiten Positionsaufnehmer sind ebenfalls zueinander in Umfangsrichtung versetzt angeordnet, wobei durch die zweiten Positionsaufnehmer die zweite Teilung abtastbar und die axiale Position des Skalenelements (und damit eine Achsverlagerung in axialer Richtung unter Betriebslast) bestimmbar ist.

Unter dem Begriff "axial" beziehungsweise "axiale Richtung" ist im Folgenden eine Richtung parallel zur Drehachse zu verstehen.

Durch zumindest einen der ersten Positionsaufnehmer ist eine Winkelstellung des Skalenelements in Bezug auf die ersten Positionsaufnehmer innerhalb einer Umdrehung hinweg absolut bestimmbar. Dies kann beispielsweise dadurch erreicht werden, dass die erste Teilung eine absolute Codespur aufweist oder aber dass auf dem Skalenelement eine Referenzmarke aufgebracht ist, die in Verbindung mit einer inkrementalen Teilung eine absolute Bestimmung der Winkelstellung innerhalb einer Umdrehung zulässt.

Die erste Richtung, entlang welcher die regelmäßigen Strukturen der ersten Teilung aneinandergereiht angeordnet sind, kann identisch mit der Umfangsrichtung sein. Genauso kann die erste Richtung zur Umfangsrichtung geneigt beziehungsweise schräg angeordnet sein (jedoch nicht senkrecht zur Umfangsrichtung). Ebenso kann die zweite Richtung, entlang welcher die regelmäßigen Strukturen der zweiten Teilung aneinandergereiht angeordnet sind, identisch mit der axialen Richtung (und damit parallel zur Drehachse) angeordnet sein. Genauso kann die zweite Richtung zur axialen Richtung geneigt beziehungsweise schräg angeordnet sein (jedoch nicht senkrecht zur axialen Richtung). Beispielsweise können regelmäßige Strukturen der ersten Teilung und die der zweiten Teilung pfeilförmig zueinander orientiert sein.

Mit Vorteil weist die Messeinrichtung zumindest drei erste Positionsaufnehmer und zumindest drei zweite Positionsaufnehmer auf.

Vorteilhafterweise ist durch die zweiten Positionsaufnehmer eine Verkippung des Skalenelements und damit eine Verkippung beziehungsweise Orientierung der Drehachse bestimmbar. Insbesondere können zumindest die zweiten Positionsaufnehmer mit einem elektronischen Baustein elektrisch verbunden sein, wobei durch den elektronischen Baustein die Verkippung des Skalenelements bestimmbar ist. Hier ist es besonders vorteilhaft wenn drei oder mehr zweite Positionsaufnehmer verwendet werden.

Bearbeitungsmaschinen sind naturgemäß entsprechend steif ausgestaltet, weshalb derartige Verkippungen beziehungsweise Abweichungen der Drehachse von der Sollorientierung vergleichsweise klein sind und in Bereichen von weniger als einer Winkelminute relativ zur idealen Drehachse, beispielsweise 100 Winkelsekunden bis hinab zu 50 Winkelsekunden, liegen. Folglich liegen durch diese Abweichungen der Drehachse von der Sollorientierung auch nur minimale Positionsänderungen vor, so dass die Messeinrichtung eine sehr hohe Auflösung haben muss um verlässliche Aussagen beziehungsweise quantitative Werte bezüglich der Verkippungen liefern zu können. Dadurch, dass die Drehachse gegebenenfalls rotiert, können die beschriebenen Abweichungen der Drehachse von der Sollorientierung zu Taumelbewegungen des Skalenelements führen, wobei die Taumelbewegungen durch die Messeinrichtung insbesondere durch Hinzunahme der gemessenen Winkelstellung quantitativ festgehalten werden können.

In weiterer Ausgestaltung der Erfindung sind die ersten Positionsaufnehmer und / oder die zweiten Positionsaufnehmer als optische Sensoren ausgestaltet und die Strukturen der ersten Teilung und / oder der zweiten Teilung als lichtmodulierende Strukturen. Alternativ kann die Messeinrichtung auch Positionsaufnehmer aufweisen, die auf einem magnetischen oder induktiven Messprinzip beruhen, wobei auch Kombinationen der Prinzipien möglich sind, so dass die erste Teilung nach einem anderen Prinzip abgetastet werden kann als die zweite Teilung. Die Messeinrichtung kann vorteilhafterweise eine Auflösung von weniger als 2 µm haben, insbesondere von weniger als 1 µm, insbesondere von weniger als 750 nm. Diese Werte für die Auflösungen können sowohl für die Bestimmung der axialen als auch der lateralen Positionen, also in der Ebene senkrecht zur Drehachse erreicht werden.

Vorteilhafterweise sind die Sensoren der ersten Positionsaufnehmer, durch welche die erste Teilung abtastbar ist, gegenüber den Sensoren der zweiten Positionsaufnehmer, durch welche die zweite Teilung abtastbar ist, bezüglich der axialen Richtung versetzt angeordnet.

Mit Vorteil ist zumindest die zweite Teilung (oder beide Teilungen) auf einer Mantelseite eines zylindrischen Skalenelementes aufgebracht.

Als Skalenelement kommt beispielsweise ein ringförmiger Körper in Betracht, der an einem drehbaren Bauelement befestigt werden kann. Alternativ können aber auch die erste und / oder die zweite Teilung direkt auf dem drehbaren Bauelement aufgebracht sein.

Vorteilhafte Ausbildungen der Erfindung entnimmt man den abhängigen Ansprüchen.

Weitere Einzelheiten und Vorteile der erfindungsgemäßen Messeinrichtung ergeben sich aus der nachfolgenden Beschreibung eines Ausführungsbeispiels anhand der beiliegenden Figuren.

### KURZE BESCHREIBUNG DER ZEICHNUNGEN

Es zeigen die
- Figur 1: eine perspektivische Prinzip-Ansicht einer Bearbeitungsmaschine,
- Figur 2: eine Schnitt-Ansicht durch einen Werkstückhalter mit der Messeinrichtung und dem Stellglied,
- Figur 3: eine Draufsicht auf die Messeinrichtung,
- Figur 4: eine Detailansicht eines Skalenelements der Messeinrichtung,
- Figur 5: eine Draufsicht auf das Stellglied,
- Figur 6: eine schematische Darstellung der Vorrichtung zur Korrektur von Positionsabweichungen.

### BESCHREIBUNG DER AUSFÜHRUNGSFORMEN

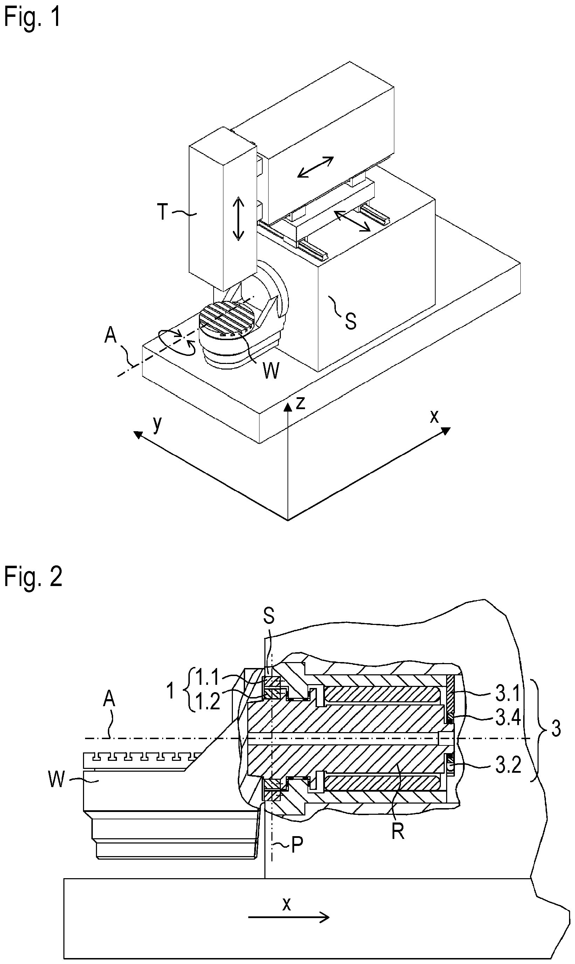

In der Figur 1 ist ein prinzipieller Aufbau einer Bearbeitungsmaschine gezeigt, die beispielsweise für eine Fräsbearbeitung geeignet ist. Die Bearbeitungsmaschine umfasst eine ortsfeste Struktur S, der ein ortsfestes kartesisches Koordinatensystem mit einer ersten Richtungsachse x, einer zweiten Richtungsachse y und einer dritten Richtungsachse z zugeordnet werden kann. Relativ zur ortsfesten Struktur S um eine Drehachse A, die parallel zur ersten Richtungsachse x orientiert ist, drehbar ist ein Werkstückhalter W beziehungsweise ein Rundtisch angeordnet. Zudem weist die Bearbeitungsmaschine einen Werkzeughalter T auf, in dem ein Fräswerkzeug fixiert werden kann. Der Werkzeughalter T kann lateral beziehungsweise transversal relativ zur ortsfesten Struktur S bewegt werden und zwar gemäß den Doppelpfeilen in der Figur 1 in der ersten Richtungsachse x, der zweiten Richtungsachse y und der dritten Richtungsachse z.

Die Figur 2 zeigt eine Detailansicht der Bearbeitungsmaschine, insbesondere den Werkstückhalter W und den dazugehörigen Antrieb, der ein um die Drehachse A drehbares Bauelement R, hier ein Rotor eines Elektromotors, aufweist. Die Bearbeitungsmaschine weist zudem eine Messeinrichtung 1 auf. Die Messeinrichtung 1 umfasst eine erste Bauteilgruppe 1.1 und eine zweite Bauteilgruppe 1.2. Die erste Bauteilgruppe 1.1 ist an der ortsfesten Struktur S und die zweite Bauteilgruppe 1.2 an dem drehbaren Bauelement R fixiert. Demnach ist die zweite Bauteilgruppe 1.2 relativ zur ersten Bauteilgruppe 1.1 um die Drehachse A drehbar, so dass die erste Bauteilgruppe 1.1 dann als Stator fungieren kann und die zweite Bauteilgruppe 1.2 auch als Rotor bezeichnet werden kann.

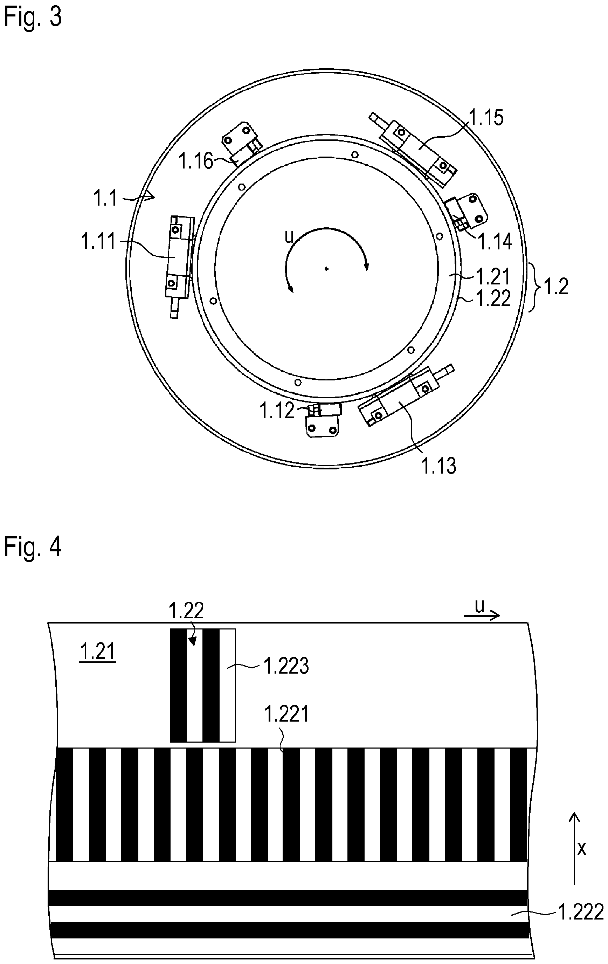

In der Figur 3 ist eine Seitenansicht der Messeinrichtung 1 dargestellt. Entsprechend weist die zweite Bauteilgruppe 1.2 ein Skalenelement 1.21 beispielsweise eine Trommel auf, das an dem drehbaren Bauelement R drehfest fixiert ist. Das Skalenelement 1.21 ist hier ringförmig ausgestaltet und umschließt das drehbare Bauelement R. Nach erfolgter Montage ist das Skalenelement 1.21 starr und drehfest mit dem drehbaren Bauelement R verbunden. Mantelseitig an dem Skalenelement 1.21 ist eine Skala 1.22 beziehungsweise eine Teilung aufgebracht.

In der Figur 4 ist ein Ausschnitt einer mantelseitigen Ansicht auf das Skalenelement 1.21 gezeigt. Das Skalenelement 1.21 ist im vorgestellten Ausführungsbeispiel als ein zylindrischer beziehungsweise ringförmiger Körper ausgebildet, an dessen Mantelseite gemäß der Figur 4 eine Skala 1.22 aufgebracht ist. Diese umfasst eine erste Teilung 1.221 als auch eine zweite Teilung 1.222, wobei die zweite Teilung 1.222 gegenüber der ersten Teilung 1.221 bezüglich der ersten Richtungsachse x versetzt angeordnet ist.

Die erste Teilung 1.221 umfasst regelmäßige Strukturen beziehungsweise Linien, die parallel entlang der Umfangsrichtung u versetzt zueinander aneinandergereiht angeordnet sind. Zudem umfasst die erste Teilung 1.221 eine Referenzmarke 1.223.

Die zweite Teilung 1.222 umfasst regelmäßige Strukturen beziehungsweise Linien, die entlang der ersten Richtungsachse x parallel zueinander aneinandergereiht angeordnet sind.

Die Strukturen der ersten Teilung 1.221, der zweiten Teilung 1.222 und die der Referenzmarke 1.223 sind im vorgestellten Ausführungsbeispiel als für Licht reflektierende und nicht reflektierende Streifen ausgestaltet.

Gemäß der Figur 3 weist die Messeinrichtung 1 drei erste Positionsaufnehmer 1.11, 1.13, 1.15 und drei zweite Positionsaufnehmer 1.12, 1.14, 1.16 auf. Die Positionsaufnehmer 1.11, 1.12, 1.13, 1.14, 1.15, 1.16 sind in Umfangsrichtung u jeweils versetzt zueinander angeordnet und dem Skalenelement 1.21 mit einem radialen Luftspalt gegenüber liegend, insbesondere entlang einer Kreislinie, angeordnet. Zudem weist hierjeder Positionsaufnehmer 1.11, 1.12, 1.13, 1.14, 1.15, 1.16 im vorgestellten Ausführungsbeispiel ein Gehäuse auf, in dem entsprechende fotosensitive Sensorelemente angeordnet sind. Alternativ dazu kann auch auf die Gehäuse verzichtet werden oder es können auch mehrere Sensorelemente in ein und demselben Gehäuse angeordnet sein. Beispielsweise können mehrere oder alle Positionsaufnehmer 1.11, 1.12, 1.13, 1.14, 1.15, 1.16 auch auf ein und derselben Platine montiert sein.

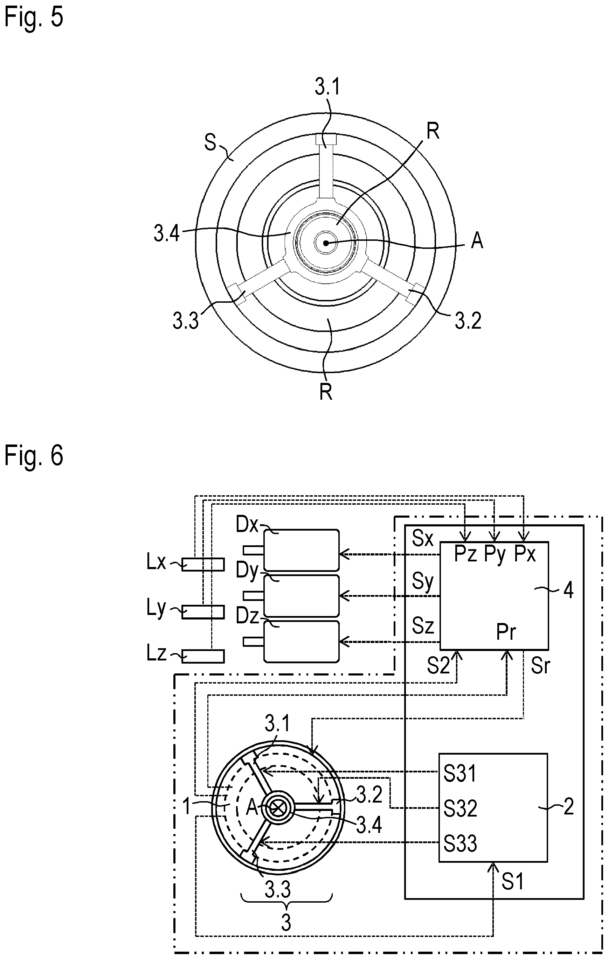

Zudem ist gemäß der Figur 2 am drehbaren Bauelement R ein Stellglied 3 montiert. Dieses befindet sich bezüglich der Messeinrichtung 1 am anderen Ende des drehbaren Bauelements R, so dass also die Wicklung des Antriebes zwischen der Messeinrichtung 1 und dem Stellglied 3 angeordnet ist. Das Stellglied 3 umfasst im vorgestellten Ausführungsbeispiel gemäß der Figur 5 drei Aktuatoren 3.1, 3.2, 3.3, die um jeweils 120° versetzt sternförmig angeordnet sind. Die radial außen liegenden Enden der Aktuatoren 3.1, 3.2, 3.3 sind an der ortsfesten Struktur S befestigt und radial innen mit einem Lager 3.4 verbunden. Im vorgestellten Ausführungsbeispiel ist das Lager 3.4 als ein Wälzlager ausgestaltet, dessen Innenring an dem drehbaren Bauelement R befestigt ist. Die Aktuatoren 3.1, 3.2, 3.3 sind längenveränderlich. Im vorgestellten Ausführungsbeispiel wird die Längenänderung durch ein Piezo-Prinzip erreicht. Dabei greifen die Aktuatoren 3.1, 3.2, 3.3 beziehungsweise die von den Aktuatoren 3.1, 3.2, 3.3 erzeugten Stellkräfte am Lager 3.4 an, insbesondere am Außenring des Lagers 3.4. Folglich ist das Stellglied 3 am drehbaren Bauelement R so montiert, dass durch Betätigen des Stellglieds 3 die Orientierung der Drehachse A relativ zur ersten Bauteilgruppe 1.1 veränderbar ist.

Das Skalenelement 1.21 vermag durch seine erste Teilung 1.221 das eingestrahlte Licht entsprechend der Winkelstellung des Skalenelements 1.21 zu modulieren. Durch die zweite Teilung 1.222 wird das eingestrahlte Licht entsprechend der axialen Position des Skalenelements 1.21 beziehungsweise des drehbaren Bauelements R moduliert. Das modulierte Licht trifft auf die Sensorelemente der Positionsaufnehmer 1.11, 1.12, 1.13, 1.14, 1.15, 1.16.

Durch die ersten Positionsaufnehmer 1.11, 1.13, 1.15 ist die erste Teilung 1.221 in der Weise abtastbar, dass durch die ersten Positionsaufnehmer 1.11, 1.13, 1.15 eine Winkelstellung des Skalenelements 1.21 in Bezug auf die ersten Positionsaufnehmer 1.11, 1.13, 1.15 bestimmbar ist. Dabei kann die Winkelstellung innerhalb einer Umdrehung hinweg absolut bestimmt werden. Zu diesem Zweck kann wie in der Figur 4 gezeigt eine an sich inkrementale erste Teilung 1.221 verwendet werden, durch die in Verbindung mit der Referenzmarke 1.223 eine absolute Winkelstellung über eine Umdrehung hinweg erzeugbar ist. Alternativ kann die erste Teilung 1.221 absolut, zum Beispiel als Pseudo-Random-Code oder Gray-Code, im Sinne einer Codierung, also mit einer Erzeugung eines eindeutigen Codewerts ausgestaltet sein. Die Signale der ersten Positionsaufnehmer 1.11, 1.13, 1.15 werden zu einer elektronischen Schaltung geleitet, wo insbesondere digitale Werte der Winkelstellung erzeugt werden. Außerdem kann durch geeignete Verknüpfung der Positionssignale der ersten Positionsaufnehmer 1.11, 1.13, 1.15 die Position des Skalenelements 1.21 in einer Ebene P, die senkrecht zur Drehachse A orientiert ist, bestimmt werden, also die y-z-Koordinaten der tatsächlichen Lage der Drehachse A. Diese Position, die auch als laterale Position bezeichnet werden kann, hängt bei dem gegebenen Werkstückhalter W von der Belastung während der Bearbeitung ab. Zudem wird der aktuellen lateralen Position auch die absolute Winkelstellung des drehbaren Bauelements R zugeordnet.

Ebenso sind die zweiten Positionsaufnehmer 1.12, 1.14, 1.16 mit der elektronischen Schaltung elektrisch verbunden. Die zweiten Positionsaufnehmer 1.12, 1.14, 1.16 dienen zur Abtastung der zweiten Teilung 1.222, wobei durch die zweiten Positionsaufnehmer 1.12, 1.14, 1.16 die axiale Position oder die Orientierung des Skalenelements 1.21 bestimmbar ist. In der elektronischen Schaltung wird auch der axialen Position die absolute Winkelstellung des drehbaren Bauelements R zugeordnet.

Demgemäß kann durch die Messeinrichtung 1 eine Messung der relativen Position zwischen der ersten Bauteilgruppe 1.1 und der zweiten Bauteilgruppe 1.2 in mehreren Dimensionen durchgeführt werden, insbesondere werden Exzentrizitäten, Taumelbewegungen oder axiale Verschiebungen des drehbaren Bauelements R relativ zur ortsfesten Struktur S bestimmt. Durch die Vorrichtung ist es möglich insbesondere bei Rundtischen in Abhängigkeit von der absoluten Winkelstellung des drehbaren Bauelements R deren laterale und axiale Position zu messen. Dadurch, dass Rundtische ohnehin sehr steif konstruiert sind, werden hier Positionsmessungen durchgeführt, die sich im µm-Bereich oder weniger bewegen. Ebenso wird die (Ist-) Orientierung der Drehachse A relativ zur ortsfesten Struktur S gemessen. Auch zu diesem Zweck ist eine hohe Auflösung insbesondere der zweiten Positionsaufnehmer 1.12, 1.14, 1.16 erforderlich.

In der Figur 6 ist eine vereinfachte prinzipielle Anordnung einer Vorrichtung zur Korrektur von Positionsabweichungen zwischen einem Werkzeughalter T und einem Werkstückhalter W einer Bearbeitungsmaschine gezeigt, welche wie durch die strich-punktierte Eingrenzung in der Figur 6 dargestellt, die Messeinrichtung 1, eine Regeleinrichtung 2, das Stellglied 3 sowie eine Steuerung 4 umfasst.

Durch die Messeinrichtung 1 sind wie oben beschrieben während des Betriebes der Bearbeitungsmaschine erste Signale S1 erzeugbar, welche eine Information der aktuellen tatsächlichen Orientierung der Drehachse A relativ zur ersten Richtungsachse x beinhalten, das heißt eine Information über die Verkippung der Drehachse A. Zur Übertragung der ersten Signale S1 ist die Messeinrichtung 1 mit der Regeleinrichtung 2 zum Beispiel über ein Kabel verbunden. Die eingehende Information über die Orientierung der Drehachse A, also die tatsächliche Lage der Drehachse A im Raum, wird durch die ersten Signale S1 der Regeleinrichtung 2 zugeführt. Gemäß bekannten Verfahrensschritten zur Regelung wird die Abweichung der Orientierung der Drehachse A von der Orientierung der ersten Richtungsachse x in Betrag und Richtung bestimmt. Dann wird die Drehachse A durch Betätigen des Stellglieds 3, hier die drei Aktuatoren 3.1, 3.2, 3.3, in eine Richtung gedrängt, so dass die Drehachse A innerhalb vordefinierter Toleranzen parallel zur ersten Richtungsachse x ausgerichtet wird, also in die Sollorientierung gebracht wird. Als Störgrößen, die dafür verantwortlich sind, dass die Orientierung der Drehachse A gegenüber der ersten Richtungsachse x verkippt, kommen beispielsweise Gewichtskräfte des Werkstückes, Abdrängkräfte des Werkzeuges bei der Bearbeitung oder Ratter-Schwingungen in Betracht. Wenn nun die Regeleinrichtung arbeitet ist das Werkzeug relativ zum Werkstück in einem korrekten Winkel orientiert.

Zur weiteren Steigerung der Präzision der Bearbeitungsmaschine werden durch die Messeinrichtung zweite Signale S2 erzeugt, die eine Information der tatsächlichen translatorischen Position der ersten Bauteilgruppe 1.1 relativ zur zweiten Bauteilgruppe 1.2 in der ersten Richtungsachse x, in der zweiten Richtungsachse y und in der dritten Richtungsachse z beinhalten. Die zweiten Signale S2 beinhalten also die Lage der Drehachse A beziehungsweise deren translatorische Verschiebung in der Ebene P beziehungsweise in einer y-z-Ebene. Die Messeinrichtung 1 ist mit der Steuerung 4 der Bearbeitungsmaschine zur Übertragung der zweiten Signale S2 verbunden. Die Steuerung 4 dient unter anderem dazu programmierte Steuerbefehle zu verarbeiten und in Bewegungsabläufe umzusetzen. Hierzu werden von der Steuerung 4 Steuersignale Sx, Sy, Sz an Antriebe Dx, Dy, Dz übertragen, die bewirken, dass der Werkzeughalter T lateral relativ zur ortsfesten Struktur S bewegt wird, gemäß den Doppelpfeilen in der Figur 1 in der ersten Richtungsachse x, der zweiten Richtungsachse y und der dritten Richtungsachse z. Die Ist-Positionen werden durch Positionsmessgeräte Lx, Ly, Lz erfasst und entsprechende Ist-Positionswerte beziehungsweise Positionssignale Px, Py, Pz der Steuerung 4 zur Lageregelung, wie bei CNC-Maschinen üblich, zugeführt. Zudem wird auch die Bewegung des drehbaren Bauelements R und damit des Werkstückhalters W durch die Steuerung 4 gesteuert. In diesem Zusammenhang empfängt die Steuerung 4 von der Messeinrichtung 1 die Ist-Winkelstellung beziehungsweise Winkelstellungssignale Pr des drehbaren Bauelements R relativ zur ortsfesten Struktur S und gibt entsprechende Steuersignale Sr an den Antrieb des Werkstückhalters W weiter.

Wie oben beschrieben, werden durch die Messeinrichtung 1 nicht nur die Orientierung der Drehachse A, sondern auch die lateralen Verschiebungen des Werkstückträgers W gemessen. Diese Verschiebungen in den Richtungen der ersten Richtungsachse x, der zweiten Richtungsachse y und der dritten Richtungsachse z werden zur Korrektur der relativen Position zwischen dem Werkzeughalter T und dem Werkstückhalter W in der Steuerung 4 berücksichtigt und mit Hilfe der Antriebe ausgeglichen. Somit beinhalten die von der Steuerung 4 an die Antriebe Dx, Dy, Dz übertragenen Signale Sx, Sy, Sz bereits korrigierte Positionswerte.

Auf diese Weise kann also einerseits eine korrekte Orientierung der Drehachse A durch die Regeleinrichtung 2 und eine exakte Positionierung des Werkzeughalters T relativ zum Werkstückhalter W durch die Steuerung erreicht werden.

Die Regeleinrichtung 2 ist also so konfiguriert, dass in Abhängigkeit von der Abweichung der tatsächlichen Orientierung der Drehachse A von der Orientierung der ersten Richtungsachse x das Stellglied 3 in der Weise ansteuerbar ist, dass diese Abweichung reduziert wird. Zudem wird in Abhängigkeit von der Abweichung der tatsächlichen Position der Drehachse A von einer SollPosition in der ersten Ebene P die Position der Drehachse A durch das Stellelement korrigiert.

## Patentansprüche

1. Vorrichtung umfassend eine Messeinrichtung (1), eine Regeleinrichtung (2), ein Stellglied (3) sowie eine Steuerung (4), wobei die Vorrichtung dazu geeignet ist Positionsabweichungen zwischen einem Werkzeughalter (T) und einem Werkstückhalter (W) einer Bearbeitungsmaschine zu korrigieren, wobei
die Messeinrichtung (1) eine erste Bauteilgruppe (1.1) und eine zweite Bauteilgruppe (1.2) umfasst, und die erste Bauteilgruppe (1.1) und die zweite Bauteilgruppe (1.2) relativ zueinander um eine Drehachse (A) drehbar sind, wobei
¬ die erste Bauteilgruppe (1.1) ortsfest angeordnet ist bezüglich eines kartesischen Koordinatensystems mit einer ersten Richtungsachse (x), einer zweiten Richtungsachse (y) und einer dritten Richtungsachse (z),
¬ die zweite Bauteilgruppe (1.2) an einem um die Drehachse (A) drehbaren Bauelement (R) befestigbar ist, so dass die Drehachse (A) im kartesischen Koordinatensystem parallel zur ersten Richtungsachse (x) verläuft und
durch die Messeinrichtung (1) eine Messung der relativen Position zwischen der ersten Bauteilgruppe (1.1) und der zweiten Bauteilgruppe (1.2) in mehreren Dimensionen durchführbar ist, wobei durch die Messeinrichtung (1)
- erste Signale (S1) erzeugbar sind, welche eine Information der tatsächlichen Orientierung der Drehachse (A) relativ zur ersten Richtungsachse (x) beinhalten, sowie
- zweite Signale (S2) erzeugbar sind, die eine Information der tatsächlichen Position der ersten Bauteilgruppe (1.1) relativ zur zweiten Bauteilgruppe (1.2) in der ersten Richtungsachse (x) und / oder der zweiten Richtungsachse (y) und / oder der dritten Richtungsachse (z) beinhalten, wobei
die Messeinrichtung (1) mit der Regeleinrichtung (2) zur Übertragung der ersten Signale (S1) verbunden ist, und
das Stellglied (3) am Bauelement (R) so montierbar ist, dass durch Betätigen des Stellglieds (3) die Orientierung der Drehachse (A) relativ zur ersten Bauteilgruppe (1.1) veränderbar ist und
die Regeleinrichtung (2) so konfiguriert ist, dass in Abhängigkeit von der Information der tatsächlichen Orientierung der Drehachse (A) relativ zur ersten Richtungsachse (x) die Drehachse (A) mit Hilfe des Stellglieds (3) in eine Sollorientierung bringbar ist und weiterhin
die Messeinrichtung (1) mit der Steuerung (4) zur Übertragung der zweiten Signale (S2) verbunden ist zur Korrektur der relativen Position zwischen dem Werkzeughalter (T) und dem Werkstückhalter (W).

2. Vorrichtung gemäß dem Anspruch 1, wobei das Stellglied (3) zumindest zwei Aktuatoren (3.1, 3.2, 3.3) umfasst.

3. Vorrichtung gemäß dem Anspruch 1, wobei das Stellglied (3) drei Aktuatoren (3.1, 3.2, 3.3) umfasst, welche sternförmig angeordnet sind.

4. Vorrichtung gemäß dem Anspruch 1, wobei das Stellglied (3) genau einen Aktuator (3.1, 3.2, 3.3) aufweist.

5. Vorrichtung gemäß einem der vorhergehenden Ansprüche, wobei das Stellglied (3) zumindest einen Aktuator (3.1, 3.2, 3.3) und ein Lager (3.4) umfasst, wobei der zumindest eine Aktuator (3.1, 3.2, 3.3) an dem Lager (3.4) angreift.

6. Vorrichtung gemäß einem der vorhergehenden Ansprüche, wobei das Stellglied (3) zumindest einen Aktuator (3.1, 3.2, 3.3) und ein Lager (3.4) umfasst, wobei das Lager (3.4) an dem drehbaren Bauelement (R) montierbar ist.

7. Vorrichtung gemäß einem der vorhergehenden Ansprüche, wobei das Stellglied (3) zumindest einen Aktuator (3.1, 3.2, 3.3) umfasst, dessen Funktion auf einem Piezo-Effekt beruht.

8. Vorrichtung gemäß einem der vorhergehenden Ansprüche, wobei das Stellglied (3) zumindest einen Aktuator (3.1, 3.2, 3.3) umfasst, der ein Keilgetriebe aufweist.

9. Vorrichtung gemäß einem der vorhergehenden Ansprüche, wobei durch die Messeinrichtung (1) eine Messung der Winkelstellung zwischen der ersten Bauteilgruppe (1.1) und der zweiten Bauteilgruppe (1.2) durchführbar ist und Winkelstellungssignale (Pr) erzeugbar sind, welche eine Information der Winkelstellung beinhalten, wobei die Messeinrichtung (1) mit der Steuerung (4) zur Übertragung der Winkelstellungssignale (Pr) verbunden ist.

## Claims

1. Apparatus comprising a measuring device (1), a regulating device (2), an actuating element (3) and a controller (4), wherein the apparatus is suitable for correcting positional deviations between a tool holder (T) and a workpiece holder (W) of a processing machine, wherein
the measuring device (1) comprises a first component group (1.1) and a second component group (1.2), and the first component group (1.1) and the second component group (1.2) are rotatable relative to each other about an axis of rotation (A), wherein
¬ the first component group (1.1) is arranged in a fixed position with respect to a Cartesian coordinate system with a first directional axis (x), a second directional axis (y) and a third directional axis (z),
¬ the second component group (1.2) can be fixed to a structural element (R) that can be rotated about the axis of rotation (A), so that the axis of rotation (A) runs parallel to the first directional axis (x) in the Cartesian coordinate system, and
by means of the measuring device (1), a measurement of the relative position between the first component group (1.1) and the second component group (1.2) can be carried out in several dimensions, wherein, by means of the measuring device (1),
- it is possible to generate first signals (S1), which include information about the actual orientation of the axis of rotation (A) relative to the first directional axis (x), and
- it is possible to generate second signals (S2), which include information about the actual position of the first component group (1.1) relative to the second component group (1.2) in the first directional axis (x) and/or the second directional axis (y) and/or the third directional axis (z), wherein
the measuring device (1) is connected to the regulating device (2) for the transmission of the first signals (S1), and
the actuating element (3) can be mounted on the structural element (R) such that the orientation of the axis of rotation (A) relative to the first component group (1.1) can be changed by actuating the actuating element (3), and
the regulating device (2) is configured such that, depending on the information about the actual orientation of the axis of rotation (A) relative to the first directional axis (x), the axis of rotation (A) can be moved into a desired orientation with the aid of the actuating element (3) and, furthermore,
the measuring device (1) is connected to the controller (4) for the transmission of the second signals (S2) to correct the relative position between the tool holder (T) and the workpiece holder (W).

2. Apparatus according to Claim 1, wherein the actuating element (3) comprises at least two actuators (3.1, 3.2, 3.3).

3. Apparatus according to Claim 1, wherein the actuating element (3) comprises three actuators (3.1, 3.2, 3.3), which are arranged in the shape of a star.

4. Apparatus according to Claim 1, wherein the actuating element (3) comprises exactly one actuator (3.1, 3.2, 3.3).

5. Apparatus according to one of the preceding claims, wherein the actuating element (3) comprises at least one actuator (3.1, 3.2, 3.3) and a bearing (3.4), wherein the at least one actuator (3.1, 3.2, 3.3) acts on the bearing (3.4) .

6. Apparatus according to one of the preceding claims, wherein the actuating element (3) comprises at least one actuator (3.1, 3.2, 3.3) and a bearing (3.4), wherein the bearing (3.4) can be mounted on the rotatable structural element (R).

7. Apparatus according to one of the preceding claims, wherein the actuating element (3) comprises at least one actuator (3.1, 3.2, 3.3), the function of which is based on a piezo effect.

8. Apparatus according to one of the preceding claims, wherein the actuating element (3) comprises at least one actuator (3.1, 3.2, 3.3) which has a wedge mechanism.

9. Apparatus according to one of the preceding claims, wherein, by means of the measuring device (1), a measurement of the angular position between the first component group (1.1) and the second component group (1.2) can be carried out and angular position signals (Pr) which include information about the angular position can be generated, wherein the measuring device (1) is connected to the controller (4) for the transmission of the angular position signals (Pr).

## Revendications

1. Dispositif, comprenant un moyen de mesure (1), un moyen de régulation (2), un organe de réglage (3) ainsi qu'une commande (4), dans lequel
le dispositif est adapté pour corriger des écarts de position entre un porte-outil (T) et un porte-pièce (W) d'une machine d'usinage, dans lequel
le moyen de mesure (1) comprend un premier groupe de composants (1.1) et un deuxième groupe de composants (1.2), et le premier groupe de composants (1.1) et le deuxième groupe de composants (1.2) peuvent tourner l'un par rapport à l'autre autour d'un axe de rotation (A), dans lequel
- le premier groupe de composants (1.1) est disposé de manière stationnaire par rapport à un système de coordonnées cartésiennes ayant un premier axe de direction (x), un deuxième axe de direction (y) et un troisième axe de direction (z),
- le deuxième groupe de composants (1.2) peut être fixé à un composant (R) pouvant tourner autour de l'axe de rotation (A) de sorte que l'axe de rotation (A) s'étend dans le système de coordonnées cartésiennes en parallèle au premier axe de direction (x), et
le moyen de mesure (1) permet d'effectuer une mesure de la position relative entre le premier groupe de composants (1.1) et le deuxième groupe de composants (1.2) dans plusieurs dimensions, dans lequel le moyen de mesure (1) peut générer
- des premiers signaux (S1) qui contiennent une information de l'orientation réelle de l'axe de rotation (A) par rapport au premier axe de direction (x), et
- des deuxièmes signaux (S2) qui contiennent une information sur la position réelle du premier groupe de composants (1.1) par rapport au deuxième groupe de composants (1.2) sur le premier axe de direction (x) et/ou le deuxième axe de direction (y) et/ou le troisième axe de direction (z), dans lequel
le moyen de mesure (1) est relié au moyen de régulation (2) pour transmettre les premiers signaux (SI), et
l'organe de réglage (3) peut être monté sur le composant (R) de telle sorte qu'un actionnement de l'organe de réglage (3) permet de modifier l'orientation de l'axe de rotation (A) par rapport au premier groupe de composants (1.1), et
le moyen de régulation (2) est configuré de telle sorte qu'en fonction de l'information sur l'orientation réelle de l'axe de rotation (A) par rapport au premier axe de direction (x), l'axe de rotation (A) peut être amené dans une orientation de consigne à l'aide de l'organe de réglage (3), et en outre
le moyen de mesure (1) est relié à la commande (4) pour transmettre les deuxièmes signaux (S2) pour corriger la position relative entre le porte-outil (T) et le porte-pièce (W).

2. Dispositif selon la revendication 1, dans lequel l'organe de réglage (3) comprend au moins deux actionneurs (3.1, 3.2, 3.3).

3. Dispositif selon la revendication 1, dans lequel l'organe de réglage (3) comprend trois actionneurs (3.1, 3.2, 3.3) qui sont disposés en forme d'étoile.

4. Dispositif selon la revendication 1, dans lequel l'organe de réglage (3) présente exactement un actionneur (3.1, 3.2, 3.3).

5. Dispositif selon l'une quelconque des revendications précédentes, dans lequel l'organe de réglage (3) comprend au moins un actionneur (3.1, 3.2, 3.3) et un palier (3.4), ledit au moins un actionneur (3.1, 3.2, 3.3) attaquant au niveau du palier (3.4).

6. Dispositif selon l'une quelconque des revendications précédentes, dans lequel l'organe de réglage (3) comprend au moins un actionneur (3.1, 3.2, 3.3) et un palier (3.4), le palier (3.4) pouvant être monté sur le composant rotatif (R).

7. Dispositif selon l'une quelconque des revendications précédentes, dans lequel l'organe de réglage (3) comprend au moins un actionneur (3.1, 3.2, 3.3) dont la fonction fait appel à un effet piézoélectrique.

8. Dispositif selon l'une quelconque des revendications précédentes, dans lequel l'organe de réglage (3) comprend au moins un actionneur (3.1, 3.2, 3.3) qui présente un mécanisme à clavette.

9. Dispositif selon l'une quelconque des revendications précédentes, dans lequel le moyen de mesure (1) permet d'effectuer une mesure de la position angulaire entre le premier groupe de composants (1.1) et le deuxième groupe de composants (1.2) et de générer des signaux de position angulaire (Pr) qui contiennent une information sur la position angulaire, le moyen de mesure (1) étant relié à la commande (4) pour transmettre les signaux de position angulaire (Pr).
